# FASCICULE DE BREVET EUROPEEN

(11) **EP 0 385 854 B1**
(45) Date de publication et mention de la délivrance du brevet: **12.05.1993**
(21) Numéro de dépôt: 90400543.6
(22) Date de dépôt: 27.02.1990
(51) Int. Cl.: A01B 15/14

(54) **Charrue multiple à voie variable**
Mehrscharpflug mit Arbeitsbreiteneinstellung
Multi-furrow plough with working-width adjustment

(30) Priorité: 28.02.1989 FR 8902578
(43) Date de publication de la demande: 05.09.1990
(73) Titulaire: S.A.R.L. ETS. GREGOIRE-BESSON et Cie, F-49230 Montigne-sur-Moine (FR)
(72) Inventeur: Besson, Alphonse, F-49230 Montigne Sur Moine (FR)
(74) Mandataire: Dawidowicz, Armand

(56) Documents cités:
- DE-U- 8 631 070
- GB-A- 2 205 472

## Description

L'invention concerne une charrue multiple à voie variable du type comportant une pluralité de socs solidaires chacun d'un support articulé sur une poutre, chacun desdits supporte étant en outre articulé sur une barre de liaison formant, pour deux supports, un parallèlogramme articulé, ladite poutre étant reliée à une tête d'attelage d'un tracteur, la position angulaire de ladite poutre par rapport à la direction d'avancement pouvant être réglée par une liaison de longueur variable, telle qu'un vérin de commande, articulée entre la tête d'attelage et la poutre ou des organes solidaires respectivement de la tête d'attelage et de la poutre, la poutre étant articulée à une extrémité d'un bras dont l'autre extrémité est articulée à la tête d'attelage, un support de soc étant articulée à une extrémité d'une biellette dont l'autre extrémité est relié à l'extrémité dudit vérin de commande et à une extrémité d'une tringle de liaison dont l'autre extrémité est articulée sur la tête d'attelage, un organe de liaison de longueur réglable produisant une rotation de la poutre. Une telle chaîne est connue du DE-U- 8631070.4.

Lors de l'inclinaison de la poutre, les corps de charrue, constitués chacun par un support portant un soc, pivotent par rapport à cette poutre du fait de leur articulation sur la barre de liaison et leur ligne d'action reste parallèle à la direction d'avancement. On peut ainsi régler la largeur de travail tout en conservant les mêmes rapports d'écartement des corps de charrue.

Cependant, après un tel réglage de largeur de travail, il est nécessaire d'effectuer un réglage du déport latéral pour que le premier corps de charrue se trouve à une distance, par rapport au dernier sillon creusé, égale au nouvel écartement entre les corps de charrue.

Pour résoudre ce problème, diverses solutions ont été proposées. Une première solution consiste à faire coulisser transversalement la poutre par rapport à la tête d'attelage. Une telle réalisation entraîne une certaine complication de la tête d'attelage et permet difficilement d'effectuer l'opération pendant le labour.

On a également proposé (voir FR-A-2.488.479) d'obtenir ce déport latéral en faisant pivoter l'ensemble des corps de charrue par rapport à la poutre au moyen d'une commande positive agissant entre la poutre et l'un des supports. Les corps de charrue se réalignent ensuite au cours de l'opération de labour. Ce réalignement est un des inconvénients de cette proposition puisque le début des nouveaux sillons est curviligne.

La présente invention vise à obtenir une charrue du type décrit à l'introduction qui ne présente pas les inconvénients des charrues connues, tout en étant de fabrication simple et économique et de construction solide.

A cet effet, la charrue selon l'invention est caractérisée en ce que l'extrémité de la biellette est articulée directement avec un axe d'articulation unique, à l'extrémité dudit verin et à la tringle de liaison et que cet axe d'articulation est logé dans une lumière oblongue d'une pièce fixe par rapport à la poutre.

Le vérin de commande, assurant le déplacement de la biellette, oriente le corps de soc auquel elle est articulée et, avec lui, l'ensemble des autres corps de soc par l'intermédiaire de la barre de liaison, par rapport à la poutre. Simultanément, par l'intermédiaire de la tringle de liaison, le vérin produit une rotation de même angle de la poutre, de telle sorte que les corps de soc sont amenés automatiquement à la largeur de travail voulue tout en restant parallèles à la direction de travail, du fait du pivotement de la poutre. Les corps de soc restent orientés parallèlement à la direction d'avance et la poutre pivote par rapport à ces corps fixes en orientation. L'organe de liaison, maintenu à une longueur fixe, assure le positionnement automatique de la poutre en fonction de la largeur de travail choisie.

Lorsqu'on désire obtenir un déport latéral supplémentaire, on fait varier la longueur de cet organe de liaison. Les corps de soc restant parallèles à la direction d'avancement du fait de l'articulation d'un corps sur la biellette, elle-même reliée à la tringle de liaison, c'est la poutre qui bascule par rapport à la tête d'attelage.

Selon une forme de réalisation de l'invention, ledit organe de longueur réglable est articulé à une extrémité en un point intermédiaire dudit bras et à son autre extrémité sur un second support de soc.

Selon une variante de réalisation, ledit organe de longueur réglable est articulé à une extrémité sur la tête d'attelage et à son autre extrémité sur ladite poutre.

De préférence, la tringle de liaison entre la tête d'attelage et la biellette est de longueur variable. Avantageusement, ladite tringle de liaison à longueur variable est constituée par un vérin.La variation de longueur de la tringle de liaison permet d'ajuster automatiquement le dévers de la charrue. En outre, dans le cas d'un vérin constituant la tringle de liaison à longueur variable, lorsque la charrue est réversible, ce vérin permet d'effectuer un réalignement de la charrue afin de faciliter le retournement.

On voit donc que, dans tous les cas, les socs restent parallèles à la direction d'avancement, de sorte que les réglages peuvent être effectués pendant le labour.

L'invention sera bien comprise à la lecture de la description suivante faite en se référant au dessin annexé dans lequel:

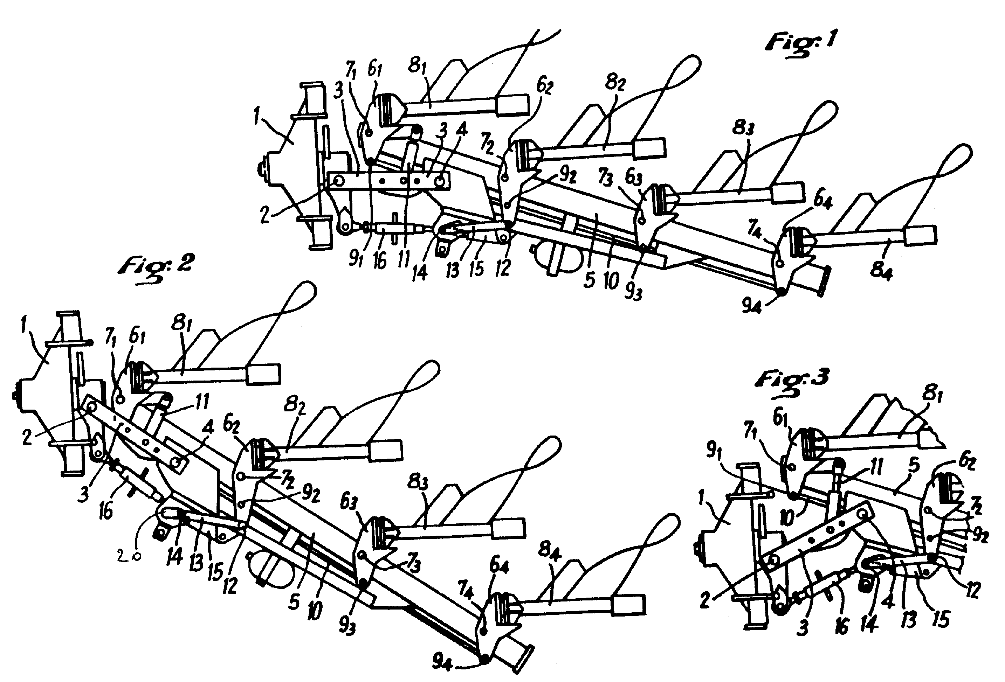

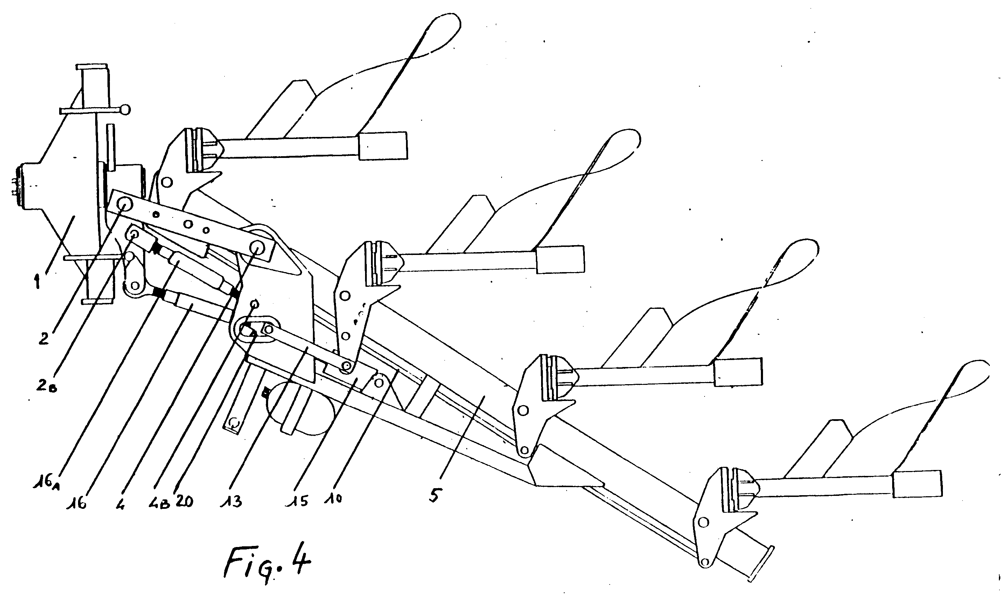

La figure 1 est une vue schématique en plan d'une charrue selon un exemple de réalisation de l'invention, en position de voie étroite et déport latéral fermé; la figure 2 est analogue à la figure 1, la charrue étant en position de voie large, et la figure 3 représente une portion de la charrue des figures 1 et 2 en position de voie étroite mais avec déport latéral ouvert ; et la figure 4 est analogue à la figure 2, pour une variante.

La charrue représentée à titre d'exemple aux figures 1 à 3 comprend une tête d'attelage 1 fixée à un tracteur (non représenté). Sur la tête d'attelage 1 est articulée une extrémité 2 d'un bras 3 dont l'autre extrémité 4 est articulée sur une poutre 5. Quatre corps de charrue 6₁, 6₂, 6₃, 6₄ sont articulés respectivement en des points 7₁, 7₂, 7₃, 7₄ de la poutre 5 et portent chacun un soc 8₁, 8₂, 8₃, 8₄.

Les corps 6₁, 6₂, 6₃, 6₄ sont également articulés, en des points 9₁, 9₂, 9₃, 9₄ respectivement sur une barre de liaison 10. Tout coulissement de la barre de liaison 10 parallèlement à la poutre 5 produit donc un pivotement de même amplitude de chacun des corps de charrue 6₁, 6₂, 6₃, 6₄.

Un vérin 11 est disposé entre un point intermédiaire du bras 3 et le premier corps de charrue 6₁.

Le deuxième corps de charrue 6₂ est articulé à une extrémité 12 d'une biellette 13 dont l'autre extrémité 14 est articulée à la tige d'un vérin 15, en même temps qu'une tringle de liaison 16 dont l'autre extrémité est articulée sur la tête d'attelage 1.

Dans la position de la figure 1, la charrue est en position de voie étroite, c'est-à-dire que les socs 8₁, 8₂, 8₃, 8₄ sont voisins les uns des autres et leur angle avec la poutre 5 est faible. Dans cette position, la tige du vérin 15 est sortie.

Pour passer dans la position de voie large représentée à la figure 2, dans laquelle les socs 8₁, 8₂, 8₃, 8₄ sont plus éloignés les uns des autres et leur angle avec la poutre 5 est plus grand, on actionne le vérin 15 dont la tige rentre. L'extrémité 14 de la biellette 13 est déplacée vers la droite (sur le dessin) et le corps 6₂ pivote dans le sens inverse des aiguilles d'une montre (sur le dessin) par rapport à la poutre 5 en produisant une translation de la barre de liaison 10. Les corps 6₁, 6₃ et 6₄ sont entraînés dans le même mouvement de pivotement par leur articulation sur la barre de liaison 10.

Simultanément, la liaison entre le premier corps 6₁ et le bras 3 par le vérin 11, fait pivoter le bras 3 dans le sens des aiguilles d'une montre (sur le dessin) et avec lui la poutre 5. La tringle de liaison 16 suit le même mouvement et la charrue arrive à la position représentée à la figure 3.

Si, dans l'une ou l'autre position, on actionne le vérin 11, le couple ainsi appliqué au support 6₁, qui tend à le faire pivoter dans le sens inverse des aiguilles d'une montre (sur le dessin), est appliqué au point 9₁ d'articulation sur la barre de liaison 10, qui tend à coulisser vers le bas (sur le dessin). Ce coulissement est interdit par le deuxième corps 6₂, maintenu par la liaison biellette 13-tringle de liaison 16.

Du fait de ce blocage, l'actionnement du vérin 11 produit en fait un pivotement du bras 3 dans le sens inverse des aiguilles d'une montre (sur le dessin), ce qui provoque un pivotement solidaire de la poutre 5 et des socs 8₁, 8₂, 8₃, 8₄ autour de l'axe 4, lequel pivote lui-même autour de l'axe 2. On arrive donc automatiquement à la position de la figure 3 dans laquelle tous les socs ont été déplacés, solidairement avec la poutre 5, vers le haut (sur le dessin). La déformation au point 14 de la liaison entre la biellette 13 et la tringle de liaison 16, permet ce déplacement d'ensemble, l'axe 14 étant logé dans une lumière oblongue 20 d'un gousset solidaire de la poutre.

Lorsque la tringle de liaison 16 est remplacée par un vérin (non représenté), ce vérin peut être utilisé lors du retournement pour réaligner la charrue.

Dans la variante de réalisation représentée à la figure 4, l'organe de liaison à longueur réglable 11 est remplacé par un organe de liaison à longueur réglable 16A articulé à une extrémité 2B sur la tête d'attelage 1 et à son autre extrémité 4B sur la poutre 5.

## Revendications

1. Une charrue multiple à voie variable du type comportant une pluralité de socs (8₁, 8₂, 8₃, 8₄) solidaires chacun d 'un support (6₁, 6₂, 6₃, 6₄) articulé sur une poutre (5), chacun desdits supports (6₁, 6₂, 6₃, 6₄) étant en outre articulé sur une barre de liaison (10) formant, pour deux supports (6₁, 6₂), un parallèlogramme articulé (7₁, 9₁, 9₂, 7₂), ladite poutre (5) étant reliée à une tête d'attelage (1) d'un tracteur, la position angulaire de ladite poutre (5) par rapport à la direction d'avancement pouvant être réglée par une liaison de longueur variable, telle qu'un vérin de commande (15), articulée entre la tête d'attelage (1) et la poutre (5) ou des organes solidaires respectivement de la tête d'attelage (1) et de la poutre (5),
la poutre (5) étant articulée à une extrémité (4) d'un bras (3) dont l'autre extrémité (2) est articulée à la tête d'attelage (1), un support de soc (6₂) étant articulée à une extrémité (12) d'une biellette (13) dont l'autre extrémité est relié à l'extrémité dudit vérin de commande (15) et à une extrémité d'une tringle de liaison (16) dont l'autre extrémité est articulée sur la tête d'attelage (1), un organe de liaison de longueur réglable (11,16A) produisant une rotation de la poutre (5),
caractérisée en ce que:
l'extrémité (14) de la biellette (13) est articulée directement, avec un axe d'articulation unique, à l'extrémité dudit vérin (15) et à la tringle de liaison (16) et que cet axe d'articulation est logé dans une lumière oblongue (20) d'une pièce fixe par rapport à la poutre.

2. Une charrue selon la revendication 1,
caractérisée en ce que ledit organe de liaison à longueur réglable (11) est articulé à une extrémité en un point intermédiaire dudit bras (3) et à son autre extrémité sur un second support (61) de soc.

3. Une charrue selon la revendication 1,
caractérisée en ce que ledit organe de liaison à longueur réglable (16A) est articulé à une extrémité sur la tête d'attelage (1) et à son autre extrémité sur ladite poutre (5).

4. Une charrue selon l'une des revendications 1 à 3,
caractérisée en ce que la tringle de liaison (16) entre la tête d'attelage (1) et la biellette (13) est de longueur variable.

5. Une charrue selon la revendication 4,
caractérisée en ce que ladite tringle de liaison à longueur variable (16) est constituée par un vérin.

6. Une charrue selon l'une des revendications 1 à 5,
caractérisée en ce qu'elle est réversible.

## Claims

1. A multiple plough with a variable track, of the type comprising a plurality of coulters (8₁, 8₂, 8₃, 8₄), each integral with a support (6₁, 6₂, 6₃, 6₄) pivotally mounted on a beam (5), each of said supports (6₁, 6₂, 6₃, 6₄) being also pivotally mounted on a connecting bar (10) forming, for two supports (6₁, 6₂), a pivotally mounted parallelogram (7₁, 9₁, 9₂, 7₂), said beam (5) being connected to an attachment head (1) of a tractor, the angular position of said beam (5) relative to the direction of advancement being adjustable via a connecting means of variable length, such as a operating jack (15), pivotally mounted between the attachment head (1) and the beam (5), or integral members respectively of the attachment head (1) and the beam (5), the beam (5) being pivotally connected to one end (4) of an arm (3), the other end (2) of which is pivotally connected to the attachment head (1), a coulter support (6₂) being pivotally connected to one end (12) of a connecting bar (13), the other end of which is connected to the end of said operating jack (15) and to one end of a connecting rod (16), the other end of which is pivotally mounted on the attachment head (1), a connecting member (11, 16A) of adjustable length producing a rotation of the beam (5), characterised in that the end (14) of the connecting bar (13) is pivotally connected directly, with a single pivotal shaft, to the end of said jack (15) and to the connecting rod (16), and in that this pivotal shaft is accommodated in an elongate aperture (20) of a component which is fixed relative to the beam.

2. A plough according to claim 1, characterised in that said connecting member (11) of adjustable length is pivotally mounted, at one end, at an intermediate point of said arm (3) and, at its other end, on a second coulter support (6₁).

3. A plough according to claim 1, characterised in that said connecting member (16A) of adjustable length is pivotally mounted, at one end, on the attachment head (1) and, at its other end, on said beam (5).

4. A plough according to one of claims 1 to 3, characterised in that the connecting rod (16) between the attachment head (1) and the connecting bar (13) is of variable length.

5. A plough according to claim 4, characterised in that said connecting rod (16) of variable length is formed by a jack.

6. A plough according to one of claims 1 to 5, characterised in that it is reversible.

## Patentansprüche

1. Ein Mehrscharpflug mit Arbeitsbreiteneinstellung der Art, daß er eine Vielzahl einstückiger Pflugscharen (8₁, 8₂, 8₃, 8₄) umfaßt, die jede aus einem Träger (6₁, 6₂, 6₃, 6₄) bestehen, der gelenkig auf einem Tragebalken (5) angebracht ist, und außerdem ist jeder der genannten Träger (6₁, 6₂, 6₃, 6₄) auf einer Verbindungsschiene (10) gelenkig angebracht, die für zwei Träger (6₁, 6₂) ein gelenkiges Parallelogramm (7₁, 9₁, 9₂, 7₂) bildet, wobei der Tragebalken (5) mit einem Kupplungskopf (1) eines Traktors verbunden ist, und wobei die Winkelstellung des genannten Tragebalkens (5) in Bezug zur Vorwärtsrichtung durch eine Verbindung von variabler Länge eingestellt werden kann, wie einer Steuerungswinde (15), die zwischen dem Kupplungskopf (1) und dem Tragebalken (5) oder den jeweils einstückigen Organen des Kupplungskopfes (1) und des Tragebalkens (5) gelenkig angebracht ist, und der Tragebalken (5) ist gelenkig an einem Ende (4) des Armes (3) angebracht, dessen anderes Ende (2) gelenkig an dem Kupplungskopf (1) angebracht ist, und ein Pflugscharträger (6₂) ist gelenkig an einem Ende (12) eines Schwingarmes (13) angebracht, dessen anderes Ende mit dem Ende der genannten Steuerungswinde (15) und einem Ende einer Verbindungsstange (16) verbunden ist, deren anderes Ende gelenkig an dem Kupplungskopf (1) angebracht ist, und ein Verbindungsorgan von einstellbarer Länge (11, 16A), das eine Drehung des Tragebalkens (5) bewirkt, dadurch gekennzeichnet, daß das Ende (14) des Schwingarmes (13) direkt gelenkig mit einer einzigen Gelenkachse am Ende der genannten Winde (15) und an der Verbindungsstange (16) angebracht ist, und daß die Gelenkachse in einem Schlitzloch (20) eines bezüglich des Tragebalkens festen Teiles gelagert ist.

2. Ein Scharpflug nach Anspruch 1, dadurch gekennzeichnet, daß das Verbindungsorgan von einstellbarer Länge (11) an einem Ende gelenkig an einem Zwischenpunkt des Armes (3) und an seinem anderen Ende auf einem zweiten Pflugscharträger (6 ₁) angebracht ist.

3. Ein Scharpflug nach Anspruch 1, dadurch gekennzeichnet, daß das Verbindungsorgan von einstellbarer Länge (16A) an einem Ende gelenkig an dem Kupplungskopf (1) und an seinem anderen Ende auf dem Tragebalken (5) angebracht ist.

4. Ein Scharpflug gemäß einem der Ansprüche 1 bis 3, dadurch gekennzeichnet, daß die Verbindungsstange (16) zwischen dem Kupplungskopf (1) und dem Schwingarm (13) von variabler Länge ist.

5. Ein Scharpflug gemäß Anspruch 4, dadurch gekennzeichnet, daß die Verbindungsstange von variabler Länge (16) von einer Winde gebildet wird.

6. Ein Scharpflug gemäß einem der Ansprüche 1 bis 5, dadurch gekennzeichnet, daß er umsteuerbar ist.
